# NEUE EUROPÄISCHE PATENTSCHRIFT

(11) **EP 1 985 908 B2**
(45) Veröffentlichungstag und Bekanntmachung des Hinweises auf die Entscheidung über den Einspruch: **19.09.2018**
(45) Hinweis auf die Patenterteilung: 16.11.2011
(21) Anmeldenummer: 07116334.9
(22) Anmeldetag: 13.09.2007
(51) Int. Cl.: F16L 53/00

(54) **Leitungsverbinder für Medienleitungen**
Circuit connector for fluid transfers
Liaison câblée pour tansfer de fluides

(30) Priorität: 26.04.2007 DE 202007006115 U; 09.07.2007 DE 202007009588 U; 28.08.2007 DE 102007040786
(43) Veröffentlichungstag der Anmeldung: 29.10.2008
(73) Patentinhaber: Voss Automotive GmbH, 51688 Wipperfürth (DE)
(72) Erfinder: Borgmeier, Olav, Dipl.-Ing., 42499 Hückeswagen (DE); Brück, Eduard, Dipl.-Ing., 51381 Leverkusen (DE); Erb, Ulrich, Dipl.-Ing., 51145 Köln-Porz (DE); Gründel, Reiner, 51647 Gummersbach (DE); Isenburg, Marco, Dipl.-Ing., 40885 Ratingen (DE); Lechner, Martin, Dr. Ing., 51789 Lindlar (DE); Peters, Frank, 51789 Lindlar (DE); Rosenfeldt, Sascha, 44137 Dortmund (DE); Schwarzkopf, Otfried, Dipl.-Ing., 51515 Kürten (DE)
(74) Vertreter: Patent- und Rechtsanwälte Dr. Solf & Zapf

(56) Entgegenhaltungen:
- EP-A- 0 764 810
- EP-A- 1 710 484
- EP-A1- 0 284 669
- EP-A2- 0 219 126
- WO-A1-99/47805
- WO-A1-2005/024219
- DE-A1- 2 746 093
- DE-A1- 10 130 362
- DE-A1- 19 902 431
- DE-U1-202005 004 602
- DE-U1-202006 003 590
- US-A- 2 793 280
- US-A- 3 932 727
- US-A1- 2005 083 638
- US-B1- 6 617 556

## Beschreibung

Die vorliegende Erfindung betrifft einen Leitungsverbinder für Medienleitungen (Rohr- oder Schlauchleitungen für insbesondere hydraulische Strömungsmedien) gemäß dem Oberbegriff des Patentanspruchs 1.

Des Weiteren bezieht sich die vorliegende Erfindung auf eine konfektionierte Medienleitung unter Verwendung eines derartigen Leitungsverbinders.

Derartige Leitungsverbinder siehe z.B. DE 29721023 U1, DE 29922230 U1, DE 20008378 U1, DE 20319558 U1, DE 3741250 A dienen zum gegenseitigen Verbinden von mindestens zwei Medienleitungen oder zur Anschlussverbindung mindestens einer Leitung an einem beliebigen Aggregat, und zwar insbesondere in einem Kraftfahrzeug. Dabei werden häufig solche Medien über die Leitungen geführt, die auf Grund eines relativ hohen Gefrierpunktes bereits bei relativ hohen, je nach Witterung durchaus möglichen Umgebungstemperaturen zum Gefrieren neigen. Dadurch können bestimmte Funktionen beeinträchtigt werden. Dies ist beispielsweise bei Wasserleitungen für die Scheibenwaschanlage der Fall sowie auch bei Leitungen für eine Harnstofflösung, die als NOₓ-Reduktionsadditiv für Dieselmotoren mit so genannten SCR-Katalysatoren eingesetzt wird.

Die EP 1 777 452 A2 beschreibt einen beheizbaren Steckverbinder der gattungsgemäßen Art, bei dem seitlich neben dem Strömungskanal im Übergangsabschnitt ein plattenförmiges Heizelement angeordnet ist. Zusätzlich kann innerhalb des Kanals eine Heizlanze angeornet sein.

Der vorliegenden Erfindung liegt die Aufgabe zu Grunde, einen Leitungsverbinder der genannten Art zu schaffen, der speziell für den genannten bevorzugten Anwendungsfall geeignet ist und noch effektiver ein Gefrieren des jeweiligen Mediums im Verbinderbereich verhindert. Des Weiteren liegt der Erfindung die Aufgabe zu Grunde, eine konfektionierte Leitung für den gleichen Zweck zur Verfügung zu stellen.

Erfindungsgemäß wird dies durch die Merkmale des Anspruchs 1 erreicht. Vorteilhafte Ausgestaltungsmerkmale der Erfindung sind in den abhängigen Ansprüchen enthalten.

Demnach sind erfindungsgemäß die zumindest im Bereich des Übergangsabschnittes, d. h. außerhalb des oder der Anschlussabschnitte, vorgesehenen elektrischen Heizmittel den Strömungskanal über seinen Umfang zumindest teilweise, bevorzugt aber vollständig über 360° umschließend angeordnet. Diese Heizmittel können ein Einfrieren des jeweiligen Mediums innerhalb des Verbinderstückes vermeiden oder aufheben, indem ein z. B. über Nacht bei stehendem Fahrzeug eingefrorenes Medium aufgetaut wird. Dabei sind die Heizmittel derart konzipiert, dass eine definierte Beheizung bei guter elektrischer Isolation, gutem Wärmeübergang, guten mechanischen Eigenschaften und Schutz vor mechanischen Beschädigungen und Korrosion gewährleistet ist. Dazu ist als Heizmittel mindestens ein Heizdraht in einer zumindest über den Bereich des Übergangsabschnittes verlaufenden Anordnung vorgesehen, wobei das Verbinderstück Formelemente zur Führung und Fixierung des außen aufgebrachten Heizdrahtes aufweist. Durch die erfindungsgemäße durchgehende Beheizung der konfektionierten Leitung über die gesamte Länge wird ein Schutz gegen Einfrieren über den gesamten Transportweg des Mediums gewährleistet. Alternative Ausführungen der Erfindung sind in den Ansprüchen 5 und 9 enthalten.

Anhand von einigen in der Zeichnung veranschaulichten, bevorzugten Ausführungsbeispielen sollen die Erfindung, vorteilhafte Ausgestaltungen und erreichte Vorteile genauer erläutert werden. Dabei zeigen:
- Fig. 1: eine Perspektivansicht einer möglichen Ausführungsform eines erfindungsgemäßen Leitungsverbinders,
- Fig. 2: eine Perspektivansicht einer anderen Ausführungsform eines erfindungsgemäßen Leitungsverbinders,
- Fig. 3: eine Perspektivansicht einer weiteren, allerdings nicht erfindungsgemäßen Ausführungsform eines erfindungsgemäßen Leitungsverbinders,
- Fig. 4: eine Perspektivansicht einer weiteren Ausführungsform eines erfindungsgemäßen Leitungsverbinders,
- Fig. 5: eine Perspektivansicht einer weiteren Ausführungsform eines erfindungsgemäßen Leitungsverbinders,
- Fig. 6: eine Perspektivansicht einer anderen Ausführungsform eines erfindungsgemäßen Leitungsverbinders,
- Fig. 7: eine Perspektivansicht einer anderen Ausführungsform eines erfindungsgemäßen Leitungsverbinders,
- Fig. 8: eine weitere Ausführung des Leitungsverbinders im Längsschnitt, die nicht erfindungsgemäß ist,
- Fig. 9: eine bevorzugte Ausführung des erfindungsgemäßen Leitungsverbinders in Perspektivansicht aus einer ersten Blickrichtung,
- Fig. 10: eine bevorzugte Ausführung des erfindungsgemäßen Leitungsverbinders in Perspektivansicht auf die gegenüberliegende Seite zu der gemäß Fig. 9,
- Fig. 11: einen Längsschnitt (Schnittebene XI-XI gemäß Fig. 12) des Leitungsverbinders gemäß Fig. 9 und 10 mit einer Gehäusehälfte einer zusätzlichen äußeren Kapselung und mit einer angeschlossenen Medienleitung mit zusätzlicher Umhüllung und Beheizung,
- Fig. 12: einen Schnitt in der Ebene XII-XII gemäß Fig. 11 mit beiden Gehäusehälften der Kapselung,
- Fig. 13: eine Seitenansicht einer erfindungsgemäßen konfektionierten Medienleitung zum Teil geschnitten,
- Fig. 14: eine Seitenansicht der konfektionierten Medienleitung gemäß Fig. 13 und
- 14a, 14b: zwei elektrische Ersatzschaltbilder für die Verschaltung der Heidrähte und Heizleiter.

In den verschiedenen Figuren der Zeichnung sind gleiche Teile stets mit denselben Bezugszeichen versehen.

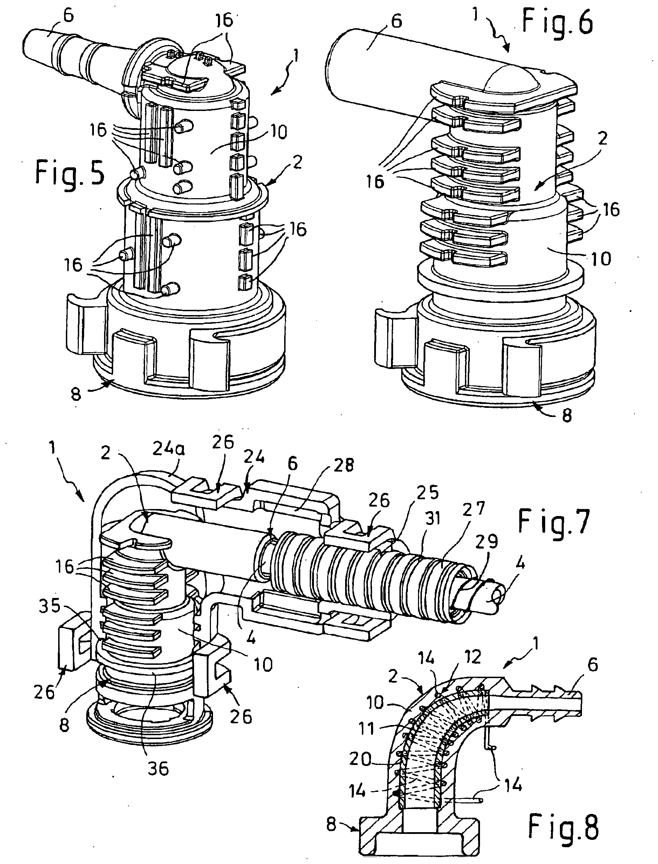

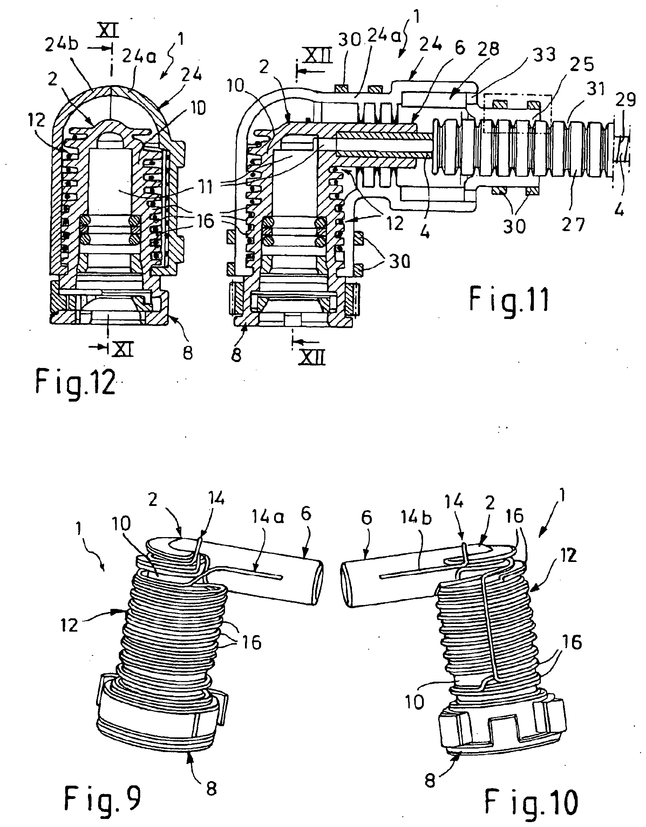

Ein erfindungsgemäßer Leitungsverbinder 1 besteht aus einem Verbinderstück 2, welches als einstückiges Formteil aus Kunststoff ausgebildet ist, insbesondere aus einem faserverstärkten Polyamid, wie PA6.6 GF30 oder PA12 GF30. Das Verbinderstück 2 weist mindestens einen Anschlussabschnitt 6 zur Anschlussverbindung mit einer Medienleitung 4 (nur in Fig. 7 und 11 dargestellt) oder mit einem beliebigen, nicht dargestellten Aggregat auf. Weiterhin weist das Verbinderstück einen dem Anschlussabschnitt 6 gegenüberliegenden weiteren Anschlussabschnitt 8 auf, der in bekannter Weise z. B. als Muffenteil für eine lösbare Steckverbindung ausgebildet ist. Der Anschlussabschnitt 8 kann aber auch als Steckabschnitt geformt sein.

In den dargestellten, bevorzugten Ausführungsbeispielen ist das Verbinderstück 2 als Winkelverbinder ausgebildet, wobei die Anschlussabschnitte 6 und 8 bezüglich ihrer Anschlussachsen einen bestimmten, beispielsweise rechten Winkel (90°) einschließen. Dabei sind die Anschlussabschnitte 6, 8 über einen Übergangsabschnitt 10 verbunden, der einen inneren, nur in Fig. 8, 11 und 12 erkennbaren Strömungskanal 11 aufweist.

Im Rahmen der Erfindung kann das Verbinderstück 2 auch eine beliebige andere, von den dargestellten Beispielen abweichende Ausgestaltung haben, z. B. als T-Stück oder Verteilerstück mit drei oder mehr Anschlussabschnitten, als geradliniger Durchgangsverbinder, als Winkelverbinder (z. B. V-Stück) mit einem beliebigen, vom rechten Winkel (90°) abweichenden Anschlussachsen-Winkel oder dergleichen.

Erfindungsgemäß weist das Verbinderstück 2 zumindest im Bereich des Übergangsabschnittes 10 elektrische Heizmittel 12 in einer den Strömungskanal 11 radial bzw. umfangsgemäß umschließenden Anordnung auf. Dadurch ist der erfindungsgemäße Leitungsverbinder 1 insbesondere für Leitungen in Kraftfahrzeugen zur Führung von gefriergefährdeten Medien, wie Wasser oder insbesondere Harnstoff, geeignet. Unter dem Begriff "Übergangsabschnitt" 10 ist der Bereich des Leitungsverbinders 1 bzw. des Verbinderstückes 2 zu verstehen, der nach Anschluss von Leitungen (4) und/oder an ein Aggregat noch "freiliegt" und deshalb mit Heizmitteln 12 versehen sein kann.

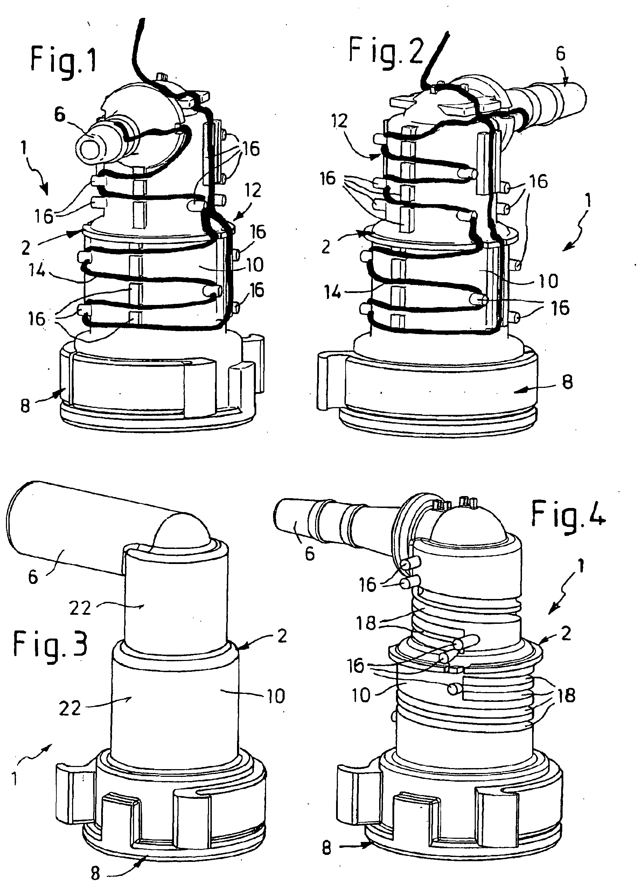

Wie sich zunächst aus Fig. 1 und 2 ergibt, kann als Heizmittel 12 mindestens ein elektrischer Heizdraht 14 (Widerstandsdraht) in einer mit einer im Wesentlichen gleichmäßigen Flächenverteilung zumindest über den Bereich des Übergangsabschnittes 10 verlaufenden Anordnung vorgesehen sein. Wie sich hierzu aus den Fig. 1, 2 sowie 4 bis 7 ergibt, weist das Verbinderstück 2 außenseitig bestimmte Formelemente zur Führung und Fixierung des außen aufgebrachten Heizdrahtes 14 auf. Als Formelemente können nach außen vorstehende Ansätze 16 bzw. Rippen und/oder - beispielsweise rillenförmige - Vertiefungen 18 (Fig. 4) vorgesehen sein. In Abhängigkeit von der Ausgestaltung und Anordnung der Formelemente 16, 18 kann der Heizdraht 14 einen beispielsweise mäanderartigen oder serpentinenartigen Verlauf zur Vermeidung einer Spulenwirkung bei Stromfluss aufweisen; vgl. dazu insbesondere Fig. 1 und 2. Alternativ dazu kann aber der Heizdraht 14 auch das Verbinderstück 2 außen spulenartig gewickelt umschließen, siehe Fig. 10 bis 12. In Fig. 4 ist dies durch einen entsprechenden, hier z. B. schraubenlinienförmigen Verlauf der rillenartigen Vertiefungen 18 angedeutet. Hierbei kann mit Vorteil im Innenbereich des Verbinderstückes 2 eine zweite, nicht erkennbare, den Strömungskanal umschließende Wicklungsspule derart angeordnet sein, dass durch einen Stromfluss durch den äußeren Heizdraht 14 eine Induktion in die innere Wicklungsspule erfolgt.

Der außen aufgebrachte Heizdraht 14 kann mit einer beispielsweise aus einem Pulverlack oder dergleichen bestehenden, isolierenden Beschichtung überdeckt sein. Es kann sich auch um eine Tauchbeschichtung handeln. Durch die isolierende Beschichtung kann der Heizdraht 14 selbst ohne eigene Isolation ausgeführt sein.

Alternativ kann der Heizdraht 14 auch in das Material des Kunststoff-Verbinderstückes 2 eingebettet (eingeformt) sein. Hierzu wird auf Fig. 8 verwiesen, wonach ein Rohrstück 20 mit dem Heizdraht 14 umwickelt und in ein Spritzwerkzeug eingelegt wird. Das mit dem Heizdraht 14 versehene Rohrstück 20 kann dann in einer beliebigen Weise mit Kunststoff umspritzt werden. Die Enden des Wicklungsdrahtes 14 sind nach außen geführt, um eine Spannung anlegen zu können. Das Rohrstück 20 kann aus Kunststoff, aber auch aus Metall bestehen, um eine gute Wärmeleitung nach innen in den Strömungskanal 11 zu erreichen.

Bei der in Fig. 3 dargestellten nicht erfindungsgemäßen Ausführungsvariante kann auf einer glatten, z. B. zylindrischen Außenfläche 22 des Verbinderstückes 2 ein nicht dargestelltes flächiges Heizelement, beispielsweise in Form einer aufgeklebten Heizfolie oder von aufgedruckten Heizleiterbahnen vorgesehen sein.

Als weitere Ausführungsvariante kann als Heizmittel 12 auch das Material des Verbinderstückes 2 selbst elektrisch leitfähig ausgebildet sein.

Um eine hohe Wärmeleitfähigkeit zu erreichen, kann bei dem aus Kunststoff bestehenden Verbinderstück 2 das Kunststoffmaterial bestimmte Füllstoffe zur Erhöhung der Wärmeleitfähigkeit aufweisen. Als Füllstoffe sind Partikel aus Aluminium, Al₂O₃, Glas- und/oder Kohlefasern geeignet.

Wie sich zunächst aus Fig. 7 ergibt, kann das Verbinderstück 2 von einer äußeren Kapselung umschlossen sein. Bei der in Fig. 7 angedeuteten Ausführung kann es sich um ein zweiteiliges, aus zwei symmetrischen Gehäusehälften 24a, 24b in Form von Halbschalen (vgl. dazu auch Fig. 11 und 12) bestehendes Außengehäuse 24 handeln, von dem in Fig. 7 nur eine Gehäusehälfte 24a dargestellt ist. Dabei können die Gehäusehälften (24a, 24b) mit Vorteil über komplementäre Rastmittel 26 miteinander verbunden werden.

Alternativ ist es auch möglich, als Kapselung das gesamte Verbinderstück 2 mit einem Außengehäuse zu umspritzen. Zudem kann als Kapselung auch ein so genannter Schrumpfschlauch, Gewebeschlauch oder dergleichen vorgesehen sein. Durch die Kapselung kann zwischen dieser und dem Verbinderstück ein Luftvolumen eingeschlossen sein, wodurch eine gute Wärmeverteilung , aber auch eine thermische Isolation nach außen erreicht wird. Die äußere Beschichtung bzw. die Kapselung kann eine Wärmeisolation nach außen bewirken. Dazu ist der Kunststoff - ohne leitende Füllstoffe - mit möglichst geringer Wärmeleitfähigkeit ausgebildet.

Bei den Ausführungen mit außen aufgebrachtem Heizdraht 14 werden die Drahtenden vorzugsweise über Rastverbindungen so befestigt, dass sie zwecks Kontaktierung nach außen ragen.

Bei der in Fig. 9 bis 12 dargestellten Ausführung bilden die äußeren Ansätze 16 durch einen schraubenlinienförmigen Verlauf eine - ebenfalls entsprechend schraubenlinienförmig verlaufende - Aufnahme für den Heizdraht 14. Dabei verläuft der Heizdraht 14 gemäß Fig. 9 ausgehend von einem ersten, im Bereich der Außenfläche des Anschlussabschnittes 6 angeordneten Drahtende 14a wendelförmig über den Bereich des Übergangsabschnittes 10 und dann gemäß Fig. 10 axial zurück, so dass ein zweites Drahtende 14b ebenfalls im Bereich der Außenfläche des Anschlussabschnittes 6 liegt, und zwar vorzugsweise dem anderen Drahtende 14a etwa diametral gegenüberliegend. Auf diese Weise können die Drahtenden 14a, 14b mit Anschlussleitern oder mit Vorteil mit Heizleitern der Medienleitung 4 elektrisch verbunden werden. Somit kann der Heizdraht 14 über z. B. wendelförmige Heizleiter der Medienleitung 4 mit elektrischer Leistung (Spannung, Strom) versorgt werden.

Die Heizmittel 12 können mit einer Leistung von 3 bis 20 Watt und der Heizdraht 14 mit einer Länge von beispielsweise bis zu 200 mm ausgebildet sein. Für ein Verbinderstück 2 mit einem Innenvolumen des Strömungskanals 11 im Bereich von 0,1 bis 1,0 cm³ ist ein Leistungsquotient im Bereich von 1 bis 15 Watt / cm³ zweckmäßig. Der Heizdraht 14 kann mit negativem Temperaturkoeffizient (NTC) oder mit positivem Temperaturkoeffizient (PTC) ausgebildet sein. Eine Versorgungsspannung in der Größenordnung von 10 bis maximal 14 Volt ist zweckmäßig.

Der jeweilige Anschlussabschnitt 6 kann als Anschlussdorn zum direkten Aufstecken einer Medienleitung 4 (s. hierzu die Ausführungen gemäß Fig. 1, 2, 4 und 5) oder als in eine Steckmuffe einsteckbarer Stekkerschaft (Fig. 3 und 6) ausgebildet sein.

Gemäß Fig. 7 und 9 bis 11 kann der Anschlussabschnitt 6 auch mit einer insbesondere hohlzylindrischen Form eine Aufnahme zum direkten Einstecken der Medienleitung 4 ausgebildet sein. Dabei wird die Medienleitung 4 vorzugsweise stoffschlüssig in dem Anschlussabschnitt 6 befestigt, beispielsweise verklebt oder verschweißt. Für ein Verschweißen mittels Laserstrahl kann der Anschlussabschnitt 6 zumindest bereichsweise aus einem lasertransparenten Material bestehen.

Wie weiterhin am Beispiel des Anschlussabschnittes 8 dargestellt ist, kann dieser auch als Steckmuffe zur Aufnahme eines Steckerschaftes ausgebildet sein. Hierbei können im Falle einer Steckverbindung beliebige Mittel zum insbesondere lösbaren Arretieren der Steckverbindungsteile vorgesehen sein. Dazu wird beispielhaft auf Fig. 11 und 12 verwiesen.

Wie sich noch aus Fig. 7 und auch aus Fig. 11 ergibt, kann es vor allem in Kombination mit der Kapselung, insbesondere in der Ausführung als Außengehäuse 24, und im Falle einer selbst ebenfalls beheizten Medienleitung 4 vorteilhaft sein, die Medienleitung 4 mit einer zusätzlichen Umhüllung 27 zu versehen, beispielsweise wie dargestellt in Form eines die Leitung 4 umschließenden Wellrohres. Die Umhüllung 27 dient zum mechanischen Schutz und zur thermischen Isolation für mindestens einen wendelförmig um die Medienleitung 4 verlaufenden Heizleiter 29. Dabei verläuft die Umhüllung 27 bis in das Außengehäuse 24 hinein und endet kurz vor dem Anschlussabschnitt 6. In diesem Bereich kann das Außengehäuse 24 eine erweiterte Kammer 28 zur Aufnahme von nicht dargestellten elektrischen Verbindungen zwischen den Heizdrahtenden 14a, b und den Enden des Heizleiters 23 der Medienleitung 4 aufweisen.

Das Außengehäuse 24 besitzt im Einführungsbereich der Umhüllung 27, dem Wellrohr, an seiner Innenwandung umlaufende Rippen 25, die in die Wellentäler 31 des Wellrohrs hineinragen. Erfindungsgemäß wird eine Formschlussverbindung zwischen dem Außengehäuse 24 und der Umhüllung 27 gebildet. Zudem ist in Fig. 7 zu erkennen, dass ebenfalls eine Formschlussverbindung zwischen dem Außengehäuse 24 und dem Verbinderstück 2 vorhanden ist. Hierzu weist das Außengehäuse 24 im Bereich des Anschlussabschnitts 8 des Verbinderstücks 2 eine Innennut 35 auf, in die ein Ringbund 36 des Verbinderstücks 2 hineinragt.

Wie sich weiterhin aus Fig. 11 ergibt, können die Gehäusehälften 24a, b des Außengehäuses 24 auch über äußere, z. B. nach Art von Spannschellen, Spanndrähten oder Federklammern ausgebildete Halteelemente 30 verbunden sein.

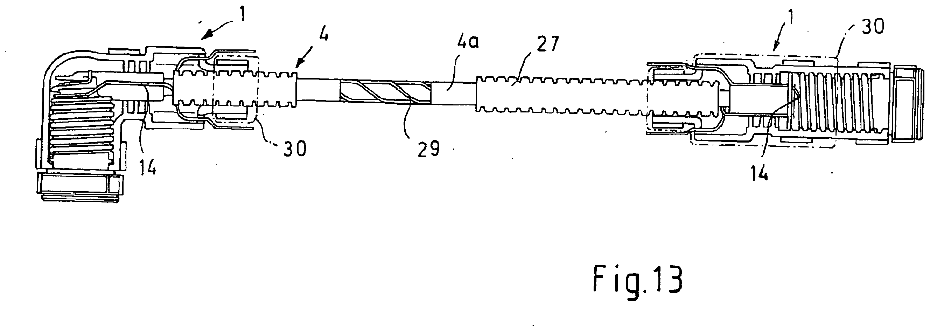

Die vorliegende Erfindung umfasst auch eine konfektionierte Medienleitung, wie sie in Fig. 13 dargestellt ist. Diese konfektionierte Medienleitung besteht aus einer inneren Rohrleitung 4a mit einem am Umfang angeordneten Heizleiter 29, wie dies bereits in Fig. 7 dargestellt ist. Die Rohrleitung 4a mit dem Heizleiter 29 wird von einer äußeren Umhüllung 27 umschlossen. Diese äußere Umhüllung 27 ist vorzugsweise als Wellrohr hergestellt. Dabei kann es sich um ein ringgewelltes oder um eine spiralgewelltes Wellrohr handeln. An den beiden Enden der derartig ausgebildeten Medienleitung 4 sind jeweils Leitungsverbinder, wie zu den Fig. 1 bis 10 erläutert, angeschlossen. Im dargestellten Ausführungsbeispiel ist einendig ein Leitungsverbinder 1, der als Winkelstecker ausgebildet ist, befestigt, und an dem anderen Ende ist ein gerader Steckanschluss als Leitungsverbinder 1 vorgesehen. In den dargestellten Beispielen sind die Leitungsverbinder 1 jeweils endseitig als Muffenteil ausgebildet, sie können jedoch ebenso als Steckerteil ausgebildet sein.

Wie in Fig. 13 dargestellt ist, ist die Umhüllung 27 in das Außengehäuse 24 des Leitungsverbinders 1 hineingeführt und mit dem Außengehäuse 24 formschlüssig verbunden. Der die Rohrleitung 4a umgebende Heizleiter 29 ist um diese spiralförmig umwickelt und insbesondere aus zwei parallel verlaufenden Drahtwicklungen 29a, b gebildet. Diese beiden Drahtwicklungen 29a, b können aus einem durchgehenden Draht bestehen, wobei die beiden Anschlussenden dann an dem gleichen Rohrleitungsende vorhanden sind. Sie können aber auch aus zwei separaten Drähten gebildet werden. Der Heizleiter 29 ist vorzugsweise mit einem Klebeband umwikkelt und wird dadurch auf der Rohrleitung 4a fixiert. Alternativ kann es ebenfalls möglich sein, dass der Heizleiter 29 mittels einer äußeren Lack- oder Kleberschicht auf der Rohrleitung 4a angeordnet ist. Insbesondere, wenn längs der Rohrleitung 4a unterschiedliche Heizleistungen gewünscht sind, kann die Dichte der Windungszahl und/oder der elektrische Widerstand entlang der Rohrleitung 4a variieren, so dass hierdurch abschnittsweise unterschiedliche Heizleistungen erzeugt werden können, z. B. in Siphonbereichen oder Fahrtwind beaufschlagten Bereichen der Medienleitung, bei denen eine erhöhte Gefrierneigung des Mediums besteht. Das innerhalb der Leitungsverbinder 1 vorhandene Verbinderstück 2 kann mit der Rohrleitung 4a über eine Steckverbindung verbunden sein, doch liegt es ebenfalls im Rahmen der Erfindung, wenn die Rohrleitung 4a mit dem Verbinderstück 2 stoffschlüssig beispielsweise durch Verschweißen oder Verkleben verbunden ist.

Weiterhin ist es zweckmäßig, wenn zwischen der Rohrleitung 4a und der Leitungsumhüllung 27 ein definierter Luftspalt ausgebildet ist. Dies kann beispielsweise durch die Ringwellung selbst erzielt werden oder aber durch innerhalb des Wellrohrs angeordnete Abstandshalter oder dergleichen. Zu einer besseren Abdichtung kann es erfindungsgemäß ebenfalls vorteilhaft sein, wenn zwischen dem Außengehäuse 24 des Leitungsverbinders 1 und dem Verbinderstück 2 insbesondere im Verbindungsbereich der Leitungsumhüllung 27 mit dem Leitungsverbinder 1 eine Vergussmasse 30 eingebracht ist. Die Vergussmasse 30 stellt einerseits einen mechanischen Schutz dar, sie kann andererseits auch dazu dienen, die IP-Schutzart durch Abdichtung zu verbessern. In Fig. 13 ist die Anordnung der Vergussmasse 30 durch eine Strichelung eingezeichnet. Hierbei ist sie z. B. im Übergangsbereich des Winkelsteckers 1 zur Rohrleitung 27 nur partiell als Teil-Verguss ausgebildet, und bei der geraden Steckverbindung ist die Vergussmasse 30 sowohl im Übergangsbereich zur Rohrleitung 27 als auch als äußere Umhüllung ausgebildet.

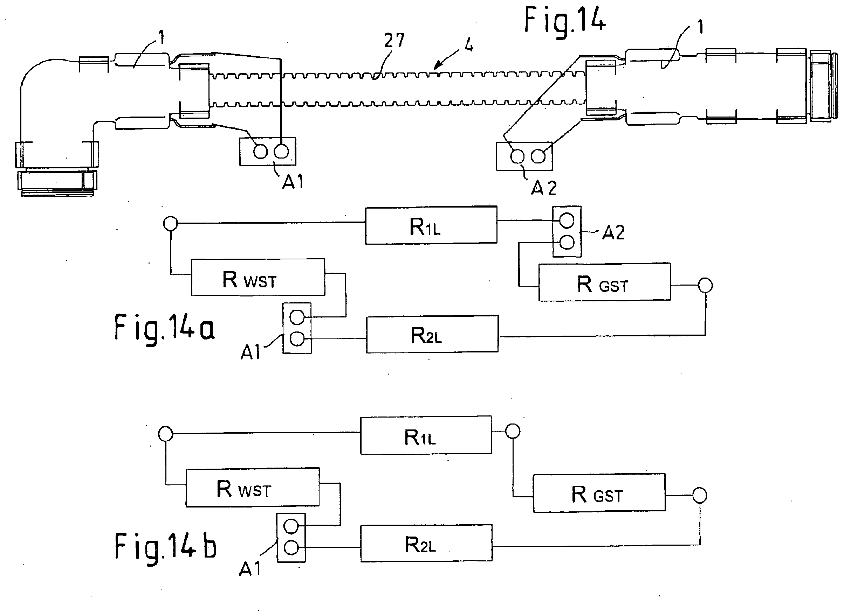

Insbesondere, wenn die erfindungsgemäßen konfektionierten Leitungen in der Nähe von Hitze erzeugenden Bauteilen verlegt werden müssen, kann es zweckmäßig sein, wenn die konfektionierte Leitung über ihre Länge gesehen ganz oder teilweise von einer Hitzeschutzschicht umgeben ist. Diese Hitzeschutzschicht kann z. B. von einer Folie, wie einer metallisierten, Wärmestrahlung reflektierenden Folie, gebildet werden. Weiterhin kann zum mechanischen Schutz und beispielsweise zum Klapperschutz auch insbesondere um die äußere Umhüllung 27 eine polsternde Schicht, beispielsweise aus Moosgummi oder dergleichen, aufgebracht werden. Auch ist es denkbar, noch eine zusätzliche äußere thermische Isolationsschicht anzuordnen. Die Anordnung einer äußeren Umhüllung bzw. einer Schutzschicht oder Armierung ist in Fig. 14 abschnittsweise durch die Außenschicht 27a im Schnitt dargestellt. In Fig. 14 ist dargestellt, auf welche Weise die Heizdrähte 14 der Leitungsverbinder 1 und die Heizleitung 29 der Rohrleitung 4a miteinander elektrisch verschaltet werden können. In Fig. 14a ist dargestellt, dass jeweils der Heizdraht eines der Leitungsverbinder 1 mit einem der Wicklungsdrähte der Drahtwicklungen 29a, b elektrisch in Reihe geschaltet ist und die Anschlussenden dieser beiden Reihenschaltungen an beiden Leitungsverbindern 1 nach außen geführt sind, wo dann ein Anschluss einer Spannungsversorgung und/oder eine Weiterverbindung erfolgen kann. Hierbei bedeutet R_{WST} der Widerstand der Heizdrahtwicklung 14 eines Leitungsverbinders 1, der im dargestellten Beispiel als Winkelstecker ausgebildet ist, und R_{1L} der elektrische Widerstand einer der Drähte der Drahtwicklungen 29a, b, die die Rohrleitung 4a umgeben. R_{GST} ist der Widerstand des Heizdrahtes 14 des geraden Steckverbinders, und R_{2L} ist der elektrische Widerstand des anderen Wickeldrahtes der Drahtwicklung 29a, b um die Rohrleitung 4a. Die außerhalb der Leitungsverbinder 1 liegenden Anschlüsse sind jeweils mit A1 und A2 gekennzeichnet. In Fig. 14b ist eine andere Verschaltung dargestellt. Hierbei sind die Heizdrähte 14 der Leitungsverbinder 1 und die der Drahtwicklungen 29a, b um die Rohrleitung 4a derart verbunden, dass eine elektrische Reihenschaltung aller Drähte gegeben ist. Die Anschlussenden zum Anschluss einer Spannungsversorgung der Reihenschaltung sind im Bereich eines Leitungsverbinders 1 nach außen geführt, und hierbei sind die Widerstände der einzelnen Drähte wie in Fig. 14a gekennzeichnet. Hierbei ist nur ein äußerer Leitungsanschluss A1 vorhanden. Die Größe der einzelnen Widerstände kann von einer Ausführungsform einer erfindungsgemäßen konfektionierten Leitung zu einer anderen jeweils variieren und hängt von der jeweils gewünschten Heizleistung ab.

Es kann weiterhin zweckmäßig sein, die Steigung der Heizdraht-Bewicklung 14 an den Endbereichen der Rohrleitung 4a zu verringern. Eine weitere Ausgestaltung kann darin bestehen, zu der umfangsgemäßen Wicklung 14 des Heizdrahtes eine weitere Wicklung im Rohrendbereich der Rohrleitung 4a anzuordnen, um zusätzliche Drahtlänge zur Verfügung zu stellen. Hierdurch wird die Möglichkeit geschaffen, beim Kontaktieren Draht aus dem Rohrleitungsende herauszuziehen.

## Patentansprüche

1. Leitungsverbinder (1) zur Anschlussverbindung mindestens einer Medienleitung, bestehend aus einem als einstückiges Kunststoff-Formteil ausgebildeten Verbinderstück (2) mit mindestens zwei Anschlussabschnitten (6, 8) zur Anschlussverbindung jeweils mit einer Medienleitung (4) oder mit einem Aggregat sowie mit einem an die Anschlussabschnitte (6, 8) angrenzenden und diese verbindenden Übergangsabschnitt (10) mit einem inneren Strömungskanal (11), wobei ein Anschlussabschnitt (8) als Muffenteil oder Steckerschaft für eine lösbare Steckverbindung und ein Anschlussabschnitt (6) als Steckabschnitt für eine Steckverbindung der Medienleitung (4) ausgebildet ist, und wobei zumindest im Bereich des Übergangsabschnittes (10) elektrische Heizmittel (12) vorgesehen sind,
**dadurch gekennzeichnet, dass** die Heizmittel (12) den Strömungskanal (11) über seinem Umfang zumindest teilweise umschließend angeordnet sind, wobei als Heizmittel (12) mindestens ein Heizdraht (14) in einer zumindest über den Bereich des Übergangsabschnittes (10) verlaufenden Anordnung vorgesehen ist, wobei der Heizdraht (14) mit einer gleichmäßigen Flächenverteilung zumindest über den Bereich des Übergangsabschnittes (10) verläuft, wobei der Heizdraht (14) das Verbinderstück (2) außen spulenartig gewickelt umschließt oder der Heizdraht (14) einen mäanderförmigen Verlauf zur Vermeidung einer Spulenwicklung bei Stromfluss aufweist, wobei das Verbinderstück (2) Formelemente (16, 18) zur Führung und Fixierung des außen aufgebrachten Heizdrahtes (14) aufweist, und wobei der Anschlussabschnitt (6) für die Medienleitung (4) als hohlzylindrische Aufnahme zum direkten Einstecken des Endes der Medienleitung (4) ausgebildet ist, wobei die Medienleitung (4) stoffschlüssig durch Verkleben oder Verschweißen befestigbar ist.

2. Leitungsverbinder nach Anspruch 1,
**dadurch gekennzeichnet, dass** das Verbinderstück (2) von einer äußeren Kapselung (24) umschlossen ist, die vorzugsweise zur Wärmeisolation mit geringer Wärmeleitfähigkeit ausgebildet ist.

3. Leitungsverbinder nach Anspruch 2,
**dadurch gekennzeichnet, dass** die Kapselung als Außengehäuse (24) insbesondere aus zwei symmetrischen Gehäusehälften (24a, 24b) gebildet ist, die zwei Halbschalen eines Außengehäuses bilden.

4. Leitungsverbinder nach Anspruch 2 oder 3,
**dadurch gekennzeichnet, dass** die Kapselung im Anschlussbereich der Medienleitung (4) eine erweiterte Kammer (28) zur Aufnahme von elektrischen Verbindungen zwischen Enden (14a, 14b) des Heizdrahtes (14) und Heizleiterenden der Medienleitung (4) aufweist.

5. Leitungsverbinder (1) zur Anschlussverbindung mindestens einer Medienleitung, bestehend aus einem als einstückiges Kunststoff-Formteil ausgebildeten Verbinderstück (2) mit mindestens zwei Anschlussabschnitten (6, 8) zur Anschlussverbindung jeweils mit einer Medienleitung (4) oder mit einem Aggregat sowie mit einem an die Anschlussabschnitte (6, 8) angrenzenden und diese verbindenden Übergangsabschnitt (10) mit einem inneren Strömungskanal (11), wobei der jeweilige Anschlussabschnitt (6, 8) als Muffenteil oder Steckerschaft für eine lösbare Steckverbindung oder als Steckabschnitt zum Aufstecken oder Einstecken der Medienleitung (4) ausgebildet ist, und wobei zumindest im Bereich des Übergangsabschnittes (10) elektrische Heizmittel (12) vorgesehen sind,
**dadurch gekennzeichnet, dass** die Heizmittel (12) den Strömungskanal (11) zumindest teilweise umschließend angeordnet sind, wobei als Heizmittel (12) mindestens ein Heizdraht (14) in einer zumindest über den Bereich des Übergangsabschnittes (10) verlaufenden Anordnung vorgesehen ist, wobei der Heizdraht (14) mit einer gleichmäßigen Flächenverteilung zumindest über den Bereich des Übergangsabschnittes (10) verläuft, wobei das Verbinderstück (2) Formelemente (16, 18) zur Führung und Fixierung des außen aufgebrachten Heizdrahtes (14) aufweist, und wobei das Verbinderstück (2) von einer äußeren Kapselung (24) umschlossen ist, wobei die Kapselung im Anschlussbereich der Medienleitung (4) eine erweiterte Kammer (28) zur Aufnahme von elektrischen Verbindungen zwischen Enden (14a, 14b) des Heizdrahtes (14) und Heizleiterenden der Medienleitung (4) aufweist.

6. Leitungsverbinder nach Anspruch 5,
**dadurch gekennzeichnet, dass** die Kapselung (24) zur Wärmeisolation mit geringer Wärmeleitfähigkeit ausgebildet ist.

7. Leitungsverbinder nach Anspruch 5 oder 6,
**dadurch gekennzeichnet, dass** die Kapselung als Außengehäuse (24) insbesondere aus zwei symmetrischen Gehäusehälften (24a, 24b) gebildet ist, die zwei Halbschalen eines Außengehäuses bilden.

8. Leitungsverbinder nach einem der Ansprüche 5 bis 7,
**dadurch gekennzeichnet, dass** mindestens einer der Anschlussabschnitte (6, 8) als hohlzylindrische Aufnahme zum direkten Einstecken des Endes der Medienleitung (4) ausgebildet ist, wobei die Medienleitung (4) stoffschlüssig durch Verkleben oder Verschweißen befestigbar ist.

9. Leitungsverbinder (1) zur Anschlussverbindung mindestens einer Medienleitung, bestehend aus einem als einstückiges Kunststoff-Formteil ausgebildeten Verbinderstück (2) mit mindestens zwei Anschlussabschnitten (6, 8) zur Anschlussverbindung jeweils mit einer Medienleitung (4) oder mit einem Aggregat sowie mit einem an die Anschlussabschnitte (6, 8) angrenzenden und diese verbindenden Übergangsabschnitt (10) mit einem inneren Strömungskanal (11), wobei der jeweilige Anschlussabschnitt (6, 8) als Muffenteil oder Steckerschaft für eine lösbare Steckverbindung oder als Steckabschnitt zum Aufstecken oder Einstecken der Medienleitung (4) ausgebildet ist, und wobei zumindest im Bereich des Übergangsabschnittes (10) elektrische Heizmittel (12) vorgesehen sind,
**dadurch gekennzeichnet, dass** die Heizmittel (12) den Strömungskanal (11) zumindest teilweise umschließend angeordnet sind, wobei als Heizmittel (12) mindestens ein Heizdraht (14) in einer zumindest über den Bereich des Übergangsabschnittes (10) verlaufenden Anordnung vorgesehen ist, wobei der Heizdraht (14) mit einer gleichmäßigen Flächenverteilung zumindest über den Bereich des Übergangsabschnittes (10) verläuft, wobei das Verbinderstück (2) Formelemente (16, 18) zur Führung und Fixierung des außen aufgebrachten Heizdrahtes (14) aufweist, und wobei das Verbinderstück (2) von einer äußeren Kapselung (24) umschlossen ist, wobei die Kapselung als Außengehäuse (24) aus zwei symmetrischen Gehäusehälften (24a, 24b) gebildet ist, die zwei Halbschalen eines Außengehäuses bilden.

10. Leitungsverbinder nach Anspruch 9,
**dadurch gekennzeichnet, dass** die Kapselung (24) zur Wärmeisolation mit geringer Wärmeleitfähigkeit ausgebildet ist.

11. Leitungsverbinder nach Anspruch 9 oder 10,
**dadurch gekennzeichnet, dass** die Kapselung im Anschlussbereich der Medienleitung (4) eine erweiterte Kammer (28) zur Aufnahme von elektrischen Verbindungen zwischen Enden (14a, 14b) des Heizdrahtes (14) und Heizleiterenden der Medienleitung (4) aufweist.

12. Leitungsverbinder nach einem der Ansprüche 9 bis 11,
**dadurch gekennzeichnet, dass** mindestens einer der Anschlussabschnitte (6, 8) als hohlzylindrische Aufnahme zum direkten Einstecken des Endes der Medienleitung (4) ausgebildet ist, wobei die Medienleitung (4) stoffschlüssig durch Verkleben oder Verschweißen befestigbar ist.

13. Leitungsverbinder nach einem der Ansprüche 1 bis 12,
**dadurch gekennzeichnet, dass** der Heizdraht (14) das Verbinderstück außen spulenartig gewickelt umschließt, wobei im Innenbereich mindestens eine weitere Wicklungsspule derart im Bereich des Strömungskanals (11) angeordnet ist, dass durch einen Stromfluss durch den äußeren Heizdraht (14) eine Induktion in die innere Wicklungsspule zur Erzeugung von Wärme erfolgt.

14. Leitungsverbinder nach einem der Ansprüche 1 bis 13,
**dadurch gekennzeichnet, dass** der Heizdraht (14) allein für sich und/oder gemeinsam mit dem Verbinderstück (2) mit einer z. B. aus einem Pulverlack oder einem Tauchbeschichtungsmaterial bestehenden, isolierenden Beschichtung überdeckt ist.

15. Leitungsverbinder nach einem der Ansprüche 1 bis 14,
**dadurch gekennzeichnet, dass** das Material des Verbinderstückes (2) eine hohe Wärmeleitfähigkeit aufweist.

16. Leitungsverbinder nach einem der Ansprüche 2 bis 15,
**dadurch gekennzeichnet, dass** die Kapselung auch zum Umschließen eines Endes der Medienleitung (4) und vorzugsweise eines Endes einer LeitungsUmhüllung (27) ausgebildet ist.

17. Leitungsverbinder nach einem der Ansprüche 1 bis 16,
**dadurch gekennzeichnet, dass** der Heizdraht (14) einen derartigen Verlauf hat, dass seine beiden Enden (14a, 14b) im Bereich eines der Anschlussabschnitte (6) vorzugsweise auf diametral gegenüberliegenden Seiten zwecks Anschlussverbindung mit äußeren Anschlussleitern und/oder mit Heizdrähten der Medienleitung (4) angeordnet sind.

18. Leitungsverbinder nach einem der Ansprüche 3, 5 oder 9,
**dadurch gekennzeichnet, dass** zwischen dem Außengehäuse (24) und dem Verbinderstück (2) ein Luftvolumen zur Wärmeverteilung und -isolation eingeschlossen ist.

19. Leitungsverbinder nach einem der Ansprüche 3, 9 oder 18,
**dadurch gekennzeichnet, dass** das Außengehäuse (24) mit dem Verbinderstück (2) formschlüssig verbunden ist.

20. Leitungsverbinder nach einem der Ansprüche 1, 8 oder 12,
**dadurch gekennzeichnet, dass** der zum Einstecken und stoffschlüssigen Befestigen des Endes der Medienleitung (4) ausgebildete Anschlussabschnitt (6) derart zumindest bereichsweise aus einem für Laserstrahlen transparenten Material besteht, dass die Medienleitung (4) durch LaserstrahlSchweißen befestigbar ist.

21. Leitungsverbinder nach einem der Ansprüche 3, 9, 18 oder 19
**dadurch gekennzeichnet, dass** Öffnungen (33) im Außengehäuse (24) vorhanden sind, die zum Herausführen von Verbindungsdrähten für den Anschluss der Heizmittel (12, 14) dienen, wobei diese Öffnungen (33) insbesondere in der Teilungsebene des Außengehäuses (24) liegen.

22. Konfektionierte Medienleitung bestehend aus einer Rohrleitung mit einem am Umfang angeordneten Heizleiter (29) sowie einem mindestens an einem Rohrleitungsende der Medienleitung befestigten beheizbaren Leitungsverbinder,
**gekennzeichnet durch** einen Leitungsverbinder (1) nach einem oder mehreren der Ansprüche 1 bis 21.

23. Konfektionierte Medienleitung nach Anspruch 22,
**dadurch gekennzeichnet, dass** eine Umhüllung (27), insbesondere in Form eines Wellrohrs, die den Heizleiter (29) aufweisende Rohrleitung (4a) umschließt.

24. Konfektionierte Medienleitung nach Anspruch 23,
**dadurch gekennzeichnet, dass** die Umhüllung (27) in das Außengehäuse (24) des Leitungsverbinders (1) hineingeführt ist und mit diesem formschlüssig verbunden ist.

25. Konfektionierte Medienleitung nach einem der Ansprüche 22 bis 24,
**dadurch gekennzeichnet, dass** der Heizleiter (29) die Rohrleitung (4a) spiralförmig umgibt und insbesondere aus zwei parallel verlaufenden Drahtwicklungen (29a, b) besteht.

26. Konfektionierte Medienleitung nach einem der Ansprüche 22 bis 25,
**dadurch gekennzeichnet, dass** der Heizleiter (29) mittels eines Klebebandes auf der Rohrleitung (4a) fixiert ist.

27. Konfektionierte Medienleitung nach einem der Ansprüche 22 bis 25,
**dadurch gekennzeichnet, dass** der Heizleiter (29) mittels einer äußeren Lack- oder Kleberschicht auf der Rohrleitung (4a) fixiert ist.

28. Konfektionierte Medienleitung nach einem der Ansprüche 22 bis 27,
**dadurch gekennzeichnet, dass** das Verbinderstück (2) mit der Rohrleitung (4a) über eine Steckverbindung verbunden ist.

29. Konfektionierte Medienleitung nach einem der Ansprüche 22 bis 27,
**dadurch gekennzeichnet, dass** das Verbinderstück (2) mit der Rohrleitung (4a) stoffschlüssig durch Verschweißen oder Verkleben verbunden ist.

30. Konfektionierte Medienleitung nach einem der Ansprüche 23 bis 29,
**dadurch gekennzeichnet, dass** zwischen der Rohrleitung (4a) und der Leitungsumhüllung (27) ein definierter Luftspalt ausgebildet ist.

31. Konfektionierte Medienleitung nach einem der Ansprüche 22 bis 30,
**dadurch gekennzeichnet, dass** zwischen dem Außengehäuse (24) und dem Verbinderstück (2) sowie insbesondere im Verbindungsbereich der Leitungsumhüllung (27) innerhalb des Außengehäuses (24) eine Vergussmasse eingebracht ist.

32. Konfektionierte Medienleitung nach einem der Ansprüche 22 bis 31,
**dadurch gekennzeichnet, dass** eine äußere Hitzeschutzschicht ganz oder teilweise aufgebracht ist.

33. Konfektionierte Medienleitung nach einem der Ansprüche 23 bis 32,
**dadurch gekennzeichnet, dass** die Leitungsumhüllung (27) mit einer thermischen Isolationsschicht (27a) und/oder einer mechanischen Schutzschicht bzw. Armierung (27a) über die Leitungslänge gesehen ganz oder teilweise umgeben ist.

34. Konfektionierte Medienleitung nach einem der Ansprüche 22 bis 33,
**dadurch gekennzeichnet, dass** der den Verbinderkörper (2) des Leitungsverbinders (1) umgebende Heizdraht (14) und der die Medienleitung umgebende Heizleiter (29) zueinander elektrisch in Reihe oder parallel geschaltet sind.

35. Konfektionierte Medienleitung nach einem der Ansprüche 22 bis 34,
**dadurch gekennzeichnet, dass** an jedem Ende der beheizbaren Medienleitung (4) ein Leitungsverbinder (1) angeschlossen ist und die Rohrleitung (4a) mit zwei parallel verlaufenden Drahtwicklungen (29a, b) umwickelt ist, wobei die Heizdrähte (14) der Leitungsverbinder und die der Drahtwicklungen (29a, b) derart verbunden sind, dass eine elektrische Reihenschaltung gegeben ist und die Anschlussenden zum Anschließen einer äußeren Spannungsversorgung der Reihenschaltung im Bereich eines Leitungsverbinders (1) nach außen geführt sind.

36. Konfektionierte Medienleitung nach einem der Ansprüche 22 bis 34,
**dadurch gekennzeichnet, dass** der Heizdraht (14) eines der Leitungsverbinder (1) jeweils mit einer der Drahtwicklungen (29a, b) elektrisch in Reihe geschaltet ist und die Anschlussenden der beiden Reihenschaltungen an jeweils einem der beiden Leitungsverbinder (1) nach außen geführt sind zum Anschluss einer Spannungsversorgung und/oder zur Weiterverbindung.

37. Konfektionierte Medienleitung nach einem der Ansprüche 22 bis 36,
**dadurch gekennzeichnet, dass** der Heizleiter (29) entlang der Rohrleitung (4a) derart angeordnet oder ausgebildet ist, dass sein elektrischer Widerstand abschnittsweise unterschiedlich ist, so dass abschnittsweise unterschiedliche Heizleistungen erzeugt werden.

## Claims

1. Line connector (1) for the terminal connection of at least one fluid conveying line, consisting of a connection piece (2) designed as a one piece formed plastic part with at least two terminal portions (6, 8) for terminal connection in each case to a fluid conveying line (4) or to a unit and with a transition portion (10) which is adjacent to the terminal portions (6, 8) and connects the latter and which has an inner flow channel (11), one terminal portion (8) being designed as a sleeve part or connector shaft for a detachable plug-in connection and one terminal portion (6) being designed as a plug-in portion for a plug-in connection of the fluid conveying line (4), and electric heating means (12) being provided at least in the region of the transition portion (10), **characterized in that** the heating means (12) are arranged at least partially surrounding the flow channel (11) around its circumference, at least one heating wire (14) being provided as heating means (12) in an arrangement extending at least over the region of the transition portion (10), the heating wire (14) extending with a uniform surface distribution at least over the region of the transition portion (10), the heating wire (14) enclosing the connection piece (2) externally wound up in the manner of a coil, or the heating wire (14) extending along a meandering path in order to avoid a coil effect during current flow, and the connection piece (2) having profiled elements (16, 18) for guiding and fixing the externally mounted heating wire (14), and the terminal portion (6) for the fluid conveying line (4) being designed as a hollow-cylinder seat for directly inserting the end of the fluid conveying line (4), the fluid conveying line (4) being able to be fastened in a material-bonded manner by means of gluing or welding.

2. Line connector according to Claim 1, **characterized in that** the connection piece (2) is surrounded by an outer enclosure (24) which is preferably designed for heat insulation with a low heat-conducting capacity.

3. Line connector according to Claim 2, **characterized in that** the enclosure is formed as an outer housing (24) in particular consisting of two symmetrical housing halves (24a, 24b) which form two half-shells of an outer housing.

4. Line connector according to Claim 2 or 3, **characterized in that** the enclosure in the terminal region of the fluid conveying line (4) has a widened chamber (28) for receiving electrical connections between ends (14a, 14b) of the heating wire (14) and heat conductor ends of the fluid conveying line (4).

5. Line connector (1) for the terminal connection of at least one fluid conveying line, consisting of a connection piece (2) designed as a one piece formed plastic part with at least two terminal portions (6, 8) for terminal connection in each case to a fluid conveying line (4) or to a unit and with a transition portion (10) which is adjacent to the terminal portions (6, 8) and connects the latter and which has an inner flow channel (11), the respective terminal portion (6, 8) being designed as a sleeve part or connector shaft for a detachable plug-in connection or as a plug-in portion for mounting or inserting the fluid conveying line (4), and electric heating means (12) being provided at least in the region of the transition portion (10), **characterized in that** the heating means (12) are arranged at least partially surrounding the flow channel (11), at least one heating wire (14) being provided as heating means (12) in an arrangement extending at least over the region of the transition portion (10), the heating wire (14) extending with a uniform surface distribution at least over the region of the transition portion (10), the connection piece (2) having profiled elements (16, 18) for guiding and fixing the externally mounted heating wire (14), and the connection piece (2) being surrounded by an outer enclosure (24), the enclosure in the terminal region of the fluid conveying line (4) having a widened chamber (28) for receiving electrical connections between ends (14a, 14b) of the heating wire (14) and heat conductor ends of the fluid conveying line (4).

6. Line connector according to Claim 5, **characterized in that** the enclosure (24) is designed for heat insulation with a low heat-conducting capacity.

7. Line connector according to Claim 5 or 6, **characterized in that** the enclosure is formed as an outer housing (24) in particular consisting of two symmetrical housing halves (24a, 24b) which form two half-shells of an outer housing.

8. Line connector according to one of Claims 5 to 7, **characterized in that** at least one of the terminal portions (6, 8) is designed as a hollow-cylinder seat for directly inserting the end of the fluid conveying line (4), the fluid conveying line (4) being able to be fastened in a material-bonded manner by means of gluing or welding.

9. Line connector (1) for the terminal connection of at least one fluid conveying line, consisting of a connection piece (2) designed as a one piece formed plastic part with at least two terminal portions (6, 8) for terminal connection in each case to a fluid conveying line (4) or to a unit and with a transition portion (10) which is adjacent to the terminal portions (6, 8) and connects the latter and which has an inner flow channel (11), the respective terminal portion (6, 8) being designed as a sleeve part or connector shaft for a detachable plug-in connection or as a plug-in portion for mounting or inserting the fluid conveying line (4), and electric heating means (12) being provided at least in the region of the transition portion (10), **characterized in that** the heating means (12) are arranged at least partially surrounding the flow channel (11), at least one heating wire (14) being provided as heating means (12) in an arrangement extending at least over the region of the transition portion (10), the heating wire (14) extending with a uniform surface distribution at least over the region of the transition portion (10), the connection piece (2) having profiled elements (16, 18) for guiding and fixing the externally mounted heating wire (14), and the connection piece (2) being surrounded by an outer enclosure (24), the enclosure being formed as an outer housing (24) consisting of two symmetrical housing halves (24a, 24b) which form two half-shells of an outer housing.

10. Line connector according to Claim 9, **characterized in that** the enclosure (24) is designed for heat insulation with a low heat-conducting capacity.

11. Line connector according to Claim 9 or 10, **characterized in that** the enclosure in the terminal region of the fluid conveying line (4) has a widened chamber (28) for receiving electrical connections between ends (14a, 14b) of the heating wire (14) and heat conductor ends of the fluid conveying line (4).

12. Line connector according to one of Claims 9 to 11, **characterized in that** at least one of the terminal portions (6, 8) is designed as a hollow-cylinder seat for directly inserting the end of the fluid conveying line (4), the fluid conveying line (4) being able to be fastened in a material-bonded manner by means of gluing or welding.

13. Line connector according to Claim 1 to 12, **characterized in that** the heating wire (14) encloses the connection piece externally wound up in the manner of a coil, at least one further winding coil being arranged in the inner zone, in the region of the flow channel (11), in such a way that, as a result of a current flow through the outer heating wire (14), induction occurs in the inner winding coil so as to produce heat.

14. Line connector according to one of Claims 1 to 13, **characterized in that** the heating wire (14) on its own and/or together with the connection piece (2) is covered with an insulating layer consisting for example of a powder lacquer or a dipcoating material.

15. Line connector according to one of Claims 1 to 14, **characterized in that** the material of the connection piece (2) has a high heat-conducting capacity.

16. Line connector according to Claim 2 to 15, **characterized in that** the enclosure is also designed to enclose one end of the fluid conveying line (4) and preferably one end of a line sheath (27).

17. Line connector according to one of Claims 1 to 16, **characterized in that** the heating wire (14) extends along such a path that both its ends (14a, 14b) are arranged in the region of one of the terminal portions (6) preferably on diametrally opposite-lying sides for the purpose of terminal connection to external terminal conductors and/or to heating wires of the fluid conveying line (4).

18. Line connector according to one of Claims 3, 5 or 9, **characterized in that** an air space for heat distribution and insulation is contained between the outer housing (24) and the connection piece (2).

19. Line connector according to one of Claims 3, 9 or 18, **characterized in that** the outer housing (24) is connected form-locked to the connection piece (2).

20. Line connector according to one of Claims 1, 8 or 12, **characterized in that** the terminal portion (6) designed for inserting and fastening the end of the fluid conveying line (4) in a material-bonded manner is made, at least in zones, of a material which is transparent to laser rays in such a way that the fluid conveying line (4) can be fastened by means of laser-beam welding.

21. Line connector according to one of Claims 3, 9, 18 or 19, **characterized in that** openings (33) are provided in the outer housing (24) and have the function of guiding out connecting wires for connection of the heating means (12, 14), these openings (33) lying in particular in the dividing plane of the outer housing (24).

22. Ready-assembled fluid conveying line consisting of a pipe with a heat conductor (29) arranged on the circumference as well as a heatable line connector fastened at least on one pipe end of the fluid conveying line, **characterized by** a line connector (1) according to one or more of Claims 1 to 21.

23. Ready-assembled fluid conveying line according to Claim 22, **characterized by** a sheath (27), in particular in the form of corrugated tube, which encloses the pipe (4a) having the heat conductor (29).

24. Ready-assembled fluid conveying line according to Claim 23, **characterized in that** the sheath (27) is guided into the outer housing (24) of the line connector (1) and is connected to the latter in a form-locked manner.

25. Ready-assembled fluid conveying line according to one of Claims 22 to 24, **characterized in that** the heat conductor (29) surrounds the pipe (4a) in the manner of a spiral and consists in particular of two parallel extending wire windings (29a,b).

26. Ready-assembled fluid conveying line according to one of Claims 22 to 25, **characterized in that** the heat conductor (29) is fixed by means of an adhesive tape on the pipe (4a).

27. Ready-assembled fluid conveying line according to one of Claims 22 to 25, **characterized in that** the heat conductor (29) is fixed by means of an outer layer of lacquer or adhesive on the pipe (4a).

28. Ready-assembled fluid conveying line according to one of Claims 22 to 27, **characterized in that** the connection piece (2) is connected to the pipe (4a) via a plug-in connection.

29. Ready-assembled fluid conveying line according to one of Claims 22 to 27, **characterized in that** the connection piece (2) is connected to the pipe (4a) in a material-bonded manner by means of welding or gluing.

30. Ready-assembled fluid conveying line according to one of Claims 23 to 29, **characterized in that** a defined air gap is formed between the pipe (4a) and the line sheath (27).

31. Ready-assembled fluid conveying line according to one of Claims 22 to 30, **characterized in that** a cast mass is applied between the outer housing (24) and the connection piece (2) as well as in particular in the connection zone of the line sheath (27) inside the outer housing (24).

32. Ready-assembled fluid conveying line according to one of Claims 22 to 31, **characterized in that** an outer heat protection layer is entirely or partially applied.

33. Ready-assembled fluid conveying line according to one of Claims 23 to 32, **characterized in that** the line sheath (27) is entirely or partly surrounded, viewed along the length of the line, with a thermal insulation layer (27a) and/or a mechanical protection layer or reinforcement (27a).

34. Ready-assembled fluid conveying line according to one of Claims 22 to 33, **characterized in that** the heating wire (14) surrounding the connection body (2) of the line connector (1) and the heat conductor (29) surrounding the fluid conveying line are connected together electrically in series or in parallel.

35. Ready-assembled fluid conveying line according to one of Claims 22 to 34, **characterized in that** a line connector (1) is connected to each end of the heatable fluid conveying line (4) and the pipe (4a) is surrounded with two parallel extending wire windings (29a,b), the heating wires (14) of the line connector and those of the wire windings (29a,b) being connected in such a way that an electric series connection is established and the terminal ends are guided externally in order to connect an external voltage supply of the series connection in the region of a line connector (1).

36. Ready-assembled fluid conveying line according to one of Claims 22 to 34, **characterized in that** the heating wire (14) of one of the line connectors (1) in each case is electrically connected in series to one of the wire windings (29a, b) and the terminal ends of the two series connections to in each case one of the two line connectors (1) are guided externally in order to connect a voltage supply and/or for further connection.

37. Ready-assembled fluid conveying line according to one of Claims 22 to 36, **characterized in that** the heat conductor (29) is arranged or is formed along the pipe (4a) in such a way that its electrical resistance progressively varies so that progressively varying heat outputs are produced.

## Revendications

1. Raccord de conduite (1) pour le raccordement d'au moins une conduite de fluide, formé par un élément de raccord (2) réalisé sous la forme d'un élément profilé en matière plastique d'une seule pièce, comportant au moins deux parties de raccordement (6, 8) pour le raccordement dans chaque cas avec une conduite de fluide (4) ou avec un organe, et comportant une partie de transition (10), qui est adjacente aux parties de raccordement (6, 8) et relie celles-ci et qui comporte un conduit d'écoulement (11) intérieur, une partie de raccordement (8) étant réalisée sous la forme d'un embout femelle ou d'un plot de fiche mâle pour un assemblage enfiché amovible et une partie de raccordement (6) sous la forme d'une partie enfichable pour un assemblage enfiché de la conduite de fluide (4), des moyens de chauffage (12) électriques étant prévus au moins dans la zone de la partie de transition (10),
**caractérisé en ce que** les moyens de chauffage (12) entourent au moins en partie le conduit d'écoulement (11) sur la périphérie, au moins un filament chauffant (14) étant prévu comme moyen de chauffage (12) dans un agencement s'étendant au moins sur la zone de la partie de transition (10), le filament chauffant (14) s'étendant au moins sur la zone de la partie de transition (10) selon une répartition uniforme sur la surface, le filament chauffant (14) étant enroulé à l'extérieur en forme de bobine autour de l'élément de raccord (2) ou le filament chauffant (14) comportant un tracé en méandres, pour empêcher un effet de bobine lors du flux du courant, l'élément de raccord (2) comportant des éléments profilés (16, 18) pour le guidage et la fixation du filament chauffant (14) posé à l'extérieur et la partie de raccordement (6) pour la conduite de fluide (4) étant réalisée sous la forme d'un logement cylindrique creux pour l'enfichage direct de l'extrémité de la conduite de fluide (4), ladite conduite de fluide (4) pouvant être fixée par adhérence de matière, par collage ou soudage.

2. Raccord de conduite selon la revendication 1,
**caractérisé en ce que** l'élément de raccord (2) est enveloppé par un encapsulage (24) extérieur, qui est réalisé de préférence pour l'isolation thermique avec une faible conductibilité thermique.

3. Raccord de conduite selon la revendication 2,
**caractérisé en ce que** l'encapsulage est réalisé sous la forme d'un boîtier extérieur (24), formé en particulier par deux moitiés de boîtier (24a, 24b) symétriques, qui forment deux demi-coques d'un boîtier extérieur.

4. Raccord de conduite selon la revendication 2 ou 3,
**caractérisé en ce que** l'encapsulage comporte dans la zone de raccordement de la conduite de fluide (4), une chambre (28) élargie destinée à recevoir des câbles électriques entre les extrémités (14a, 14b) du filament chauffant (14) et des extrémités thermoconductrices de la conduite de fluide (4).

5. Raccord de conduite (1) pour le raccordement d'au moins une conduite de fluide, formé par un élément de raccord (2) réalisé sous la forme d'un élément profilé en matière plastique d'une seule pièce, comportant au moins deux parties de raccordement (6, 8) pour le raccordement dans chaque cas avec une conduite de fluide (4) ou avec un organe, et comportant une partie de transition (10), qui est adjacente aux parties de raccordement (6, 8) et relie celles-ci et qui comporte un conduit d'écoulement (11) intérieur, la partie de raccordement (6, 8) respective étant réalisée sous la forme d'un embout femelle ou d'un plot de fiche mâle pour un assemblage enfiché amovible ou sous la forme d'une partie enfichable pour l'emmanchement ou l'enfichage de la conduite de fluide (4), des moyens de chauffage (12) électriques étant prévus au moins dans la zone de la partie de transition (10),
**caractérisé en ce que** les moyens de chauffage (12) entourent au moins en partie le conduit d'écoulement (11), au moins un filament chauffant (14) étant prévu comme moyen de chauffage (12) dans un agencement s'étendant au moins sur la zone de la partie de transition (10), le filament chauffant (14) s'etendant au moins sur la zone de la partie de transition (10) selon une répartition uniforme sur la surface, l'élément de raccord (2) comportant des éléments profilés (16, 18) pour le guidage et la fixation du filament chauffant (14) posé à l'extérieur, et l'élément de raccord (2) étant enveloppée par un encapsulage (24) extérieur, l'encapsulage comportant dans la zone de raccordement de la conduite de fluide (4), une chambre (28) élargie destinée à recevoir des câbles électriques entre les extrémités (14a, 14b) du filament chauffant (14) et des extrémités thermoconductrices de la conduite de fluide (4).

6. Raccord de conduite selon la revendication 5,
**caractérisé en ce que** l'encapsulage (24) est réalisé avec un faible conductibilité pour l'isolation thermique.

7. Raccord de conduite selon la revendication 5 ou 6,
**caractérisé en ce que** l'encapsulage est réalisé sous la forme d'un boîtier extérieur (24), formé en particulier par deux moitiés de boîtier (24a, 24b) symétriques, qui forment deux demi-coques d'un boîtier extérieur.

8. Raccord de conduite selon l'une quelconque des revendications 5 à 7, **caractérisé en ce qu'**au moins une des parties de raccordement (6, 8) est réalisée sous la forme d'un logement cylindrique creux pour l'enfichage direct de l'extrémité de la conduite de fluide (4), ladite conduite de fluide (4) pouvant être fixée par adhérence de matière, par collage ou soudage.

9. Raccord de conduite (1) pour le raccordement d'au moins une conduite de fluide, formé par un élément de raccord (2) réalisé sous la forme d'un élément profilé en matière plastique d'une seule pièce, comportant au moins deux parties de raccordement (6, 8) pour le raccordement dans chaque cas avec une conduite de fluide (4) ou avec un organe, et comportant une partie de transition (10), qui est adjacente aux parties de raccordement (6, 8) et relie celles-ci et qui comporte un conduit d'écoulement (11) intérieur, la partie de raccordement (6, 8) respective étant réalisée sous la forme d'un embout femelle ou d'un plot de fiche mâle pour un assemblage enfiché amovible ou sous la forme d'une partie enfichable pour l'emmanchement ou l'enfichage de la conduite de fluide (4), des moyens de chauffage (12) électriques étant prévus au moins dans la zone de la partie de transition (10),
**caractérisé en ce que** les moyens de chauffage (12) entourent au moins en partie le conduit d'écoulement (11), au moins un filament chauffant (14) étant prévu comme moyen de chauffage (12) dans un agencement s'étendant au moins sur la zone de la partie de transition (10), le filament chauffant (14) s'etendant au moins sur la zone de la partie de transition (10) selon une répartition uniforme sur la surface, l'élément de raccord (2) comportant des éléments profilés (16, 18) pour le guidage et la fixation du filament chauffant (14) posé à l'extérieur, et l'élément de raccord (2) étant enveloppée par un encapsulage (24) extérieur, l'encapsulage étant réalisé sous la forme d'un boîtier extérieur (24), formé en particulier par deux moitiés de boîtier (24a, 24b) symétriques, qui forment deux demi-coques d'un boîtier extérieur.

10. Raccord de conduite selon la revendication 9,
**caractérisé en ce que** l'encapsulage (24) est réalisé avec une faible conductibilité pour l'isolation thermique.

11. Raccord de conduite selon la revendications 9 ou 10,
**caractérisé en ce que** l'encapsulage comporte, dans la zone de raccordement de la conduite de fluide (4), une chambre (28) élargie destinée à recevoir des câbles électriques entre les extrémités (14a, 14b) du filament chauffant (14) et des extrémités thermoconductrices de la conduite de fluide (4).

12. Raccord de conduite selon l'une quelconque des revendications 9 à 11, **caractérisé en ce qu'**au moins une des parties de raccordement (6, 8) est réalisée sous la forme d'un logement cylindrique creux pour l'enfichage direct de l'extrémité de la conduite de fluide (4), ladite conduite de fluide (4) pouvant être fixée par adhérence de matière, par collage ou soudage.

13. Raccord de conduite selon l'une quelconque des revendications 1 à 12, **caractérisé en ce que** le filament chauffant (14) est enroulé à l'extérieur en forme de bobine autour de l'élément de raccord (2), dans lequel, dans la partie intérieure, au moins un autre bobinage est disposé dans la zone du conduit d'écoulement (11) de telle sorte que, sous l'effet d'un flux de courant à travers le filament chauffant (14) extérieur, il se produit une induction dans le bobinage intérieur en vue de générer de la chaleur.

14. Raccord de conduite selon l'une quelconque des revendications 1 à 13, **caractérisé en ce que** le filament chauffant (14), à lui seul et/ou conjointement avec l'élément de raccord (2), est revêtu d'un revêtement isolant, formé par exemple par une peinture en poudre ou un matériau de revêtement par immersion.

15. Raccord de conduite selon l'une quelconque des revendications 1 à 14, **caractérisé en ce que** le matériau de l'élément de raccord (2) possède une conductibilité thermique élevée.

16. Raccord de conduite selon l'une quelconque des revendications 2 à 15, **caractérisé en ce que** l'encapsulage est également réalisé pour envelopper une extrémité de la conduite de fluide (4) et, de préférence, une extrémité d'une enveloppe (27) de la conduite.

17. Raccord de conduite selon l'une quelconque des revendications 1 à 16, **caractérisé en ce que** le filament chauffant (14) possède un tracé tel que ses deux extrémités (14a, 14b) sont disposées dans la zone d'une des parties de raccordement (6), de préférence sur des côtés diamétralement opposés, en vue d'un raccordement avec des câbles de liaison extérieurs et/ou avec des filaments chauffants de la conduite de fluide (4).

18. Raccord de conduite selon l'une quelconque des revendications 3, 5 ou 9, **caractérisé en ce que** le boîtier extérieur (24) et l'élément de raccord (2) délimitent un volume d'air pour la répartition de la chaleur et l'isolation thermique.

19. Raccord de conduite selon l'une quelconque des revendications 3, 9 ou 18, **caractérisé en ce que** le boîtier extérieur (24) est assemblé par conjugaison de forme avec l'élément de raccord (2).

20. Raccord de conduite selon l'une quelconque des revendications 1, 8 ou 12, **caractérisé en ce que** la partie de raccordement (6) réalisée pour l'enfichage et la fixation par adhérence de matière de l'extrémité de la conduite de fluide (4) est réalisée au moins par zones dans un matériau transparent aux rayons laser, de telle sorte que la conduite de fluide (4) peut être fixée par soudage au rayon laser.

21. Raccord de conduite selon l'une quelconque des revendications 3, 9, 18 ou 19, **caractérisé en ce que** des ouvertures (33) sont ménagées dans le boîtier extérieur (24), pour permettre le guidage vers l'extrémité de câbles de liaison pour le raccordement des moyens de chauffage (12, 14), lesdites ouvertures (33) étant situées en particulier dans le plan de joint du boîtier extérieur (24).

22. Conduite de fluide préassemblée, formée par une conduite tubulaire avec un conducteur chauffant (29) disposé sur la périphérie, ainsi qu'un raccord de conduite apte à être chauffé, fixé à au moins une extrémité de la conduite de fluide, **caractérisée par** un raccord de conduite (1) selon l'une quelconque des revendications 1 à 21.

23. Conduite de fluide préassemblée selon la revendication 22, **caractérisée en ce qu'**une enveloppe (27), en particulier sous la forme d'un tube ondulé, enveloppe la conduite tubulaire (4a) munie du conducteur chauffant (29).

24. Conduite de fluide préassemblée selon la revendication 23, **caractérisée en ce que** l'enveloppe (27) est introduite dans le boîtier extérieur (24) du raccord de conduite (1) et est assemblée par conjugaison de forme à celui-ci.

25. Conduite de fluide préassemblée selon l'une quelconque des revendications 22 à 24, **caractérisée en ce que** le conducteur chauffant (29) entoure en forme de spirale la conduite tubulaire (4a) et est réalisé en particulier par deux enroulements de fil (29a, b) parallèles.

26. Conduite de fluide préassemblée selon l'une quelconque des revendications 22 à 25, **caractérisée en ce que** le conducteur chauffant (29) est fixé sur la conduite tubulaire (4a) au moyen d'une bande adhésive.

27. Conduite de fluide préassemblée selon l'une quelconque des revendications 22 à 25, **caractérisée en ce que** le conducteur chauffant (29) est fixé sur la conduite tubulaire (4a) au moyen d'une couche de peinture ou d'une couche de colle.

28. Conduite de fluide préassemblée selon l'une quelconque des revendications 22 à 27, **caractérisée en ce que** l'élément de raccord (2) est relié à la conduite tubulaire (4a) par l'intermédiaire d'un assemblage enfiché.

29. Conduite de fluide préassemblée selon l'une quelconque des revendications 22 à 27, **caractérisée en ce que** l'élément de raccord (2) est relié à la conduite tubulaire (4a) par adhérence de matière par soudage ou collage.

30. Conduite de fluide préassemblée selon l'une quelconque des revendications 23 à 29, **caractérisée en ce qu'**une lame d'air définie est réalisée entre la conduite tubulaire (4a) et l'enveloppe (27).

31. Conduite de fluide préassemblée selon l'une quelconque des revendications 22 à 30, **caractérisée en ce qu'**une pâte de scellement est introduite entre le boîtier extérieur (24) et l'élément de raccord (2), ainsi qu'en particulier dans la zone d'assemblage de l'enveloppe (27) à l'intérieur du boîtier extérieur (24).

32. Conduite de fluide préassemblée selon l'une quelconque des revendications 22 à 31, **caractérisée en ce qu'**une couche de protection thermique extérieure est déposée en totalité ou en partie.

33. Conduite de fluide préassemblée selon l'une quelconque des revendications 23 à 32, **caractérisée en ce que** l'enveloppe (27) est entourée, en totalité ou en partie par référence à la longueur de la conduite, d'une couche d'isolation thermique (27a) et d'une couche de protection mécanique ou d'un blindage (27a).

34. Conduite de fluide préassemblée selon l'une quelconque des revendications 22 à 33, **caractérisée en ce que** le filament chauffant (14), entourant l'élément de raccord (2) d'un raccord de conduite (1), et le conducteur chauffant (29), entourant la conduite de fluide, sont montés l'un par rapport à l'autre selon un montage électrique en série ou en parallèle.

35. Conduite de fluide préassemblée selon l'une quelconque des revendications 22 à 34, **caractérisée en ce qu'**un raccord de conduite (1) est raccordé à chaque extrémité de la conduite de fluide (4) apte à être chauffée, et deux enroulements de fil (29a, b) parallèles sont enroulés autour de la conduite tubulaire (4a), les filaments chauffants (14) du raccord de conduite et ceux des enroulements de fil (29a, b) sont reliés de telle sorte qu'il se forme un montage en série électrique, et les extrémités de raccordement, destinées au raccordement d'une alimentation en tension extérieure du montage en série, sont guidées vers l'extérieur dans la zone d'un raccord de conduite (1).

36. Conduite de fluide préassemblée selon l'une quelconque des revendications 22 à 34, **caractérisée en ce que** le filament chauffant (14) d'un des raccords de conduite (1) est monté respectivement avec un des enroulements de fil (29a, b) selon un montage en série électrique, et les extrémités de raccordement des deux montages en série sont guidées vers l'extérieur respectivement au niveau d'un des deux raccords de conduite (1) en vue du raccordement d'une alimentation en tension et/ou d'une liaison supplémentaire.

37. Conduite de fluide préassemblée selon l'une quelconque des revendications 22 à 36, **caractérisée en ce que** le conducteur chauffant (29) est agencé ou réalisé le long de la conduite tubulaire (4a) de telle sorte que sa résistance électrique est différente par zones, de manière à générer des puissances de chauffage différentes par zones.
